# FASCICULE DE BREVET EUROPEEN

(11) **EP 2 311 627 B1**
(45) Date de publication et mention de la délivrance du brevet: **23.01.2019**
(21) Numéro de dépôt: 10181617.1
(22) Date de dépôt: 02.03.2006
(51) Int. Cl.: B29C 70/38, B29C 31/06, B29K 105/08

(54) **Machine d'application de fibres**
Faserapplikationsmaschine
Fiber application machine

(30) Priorité: 03.03.2005 FR 0502134
(43) Date de publication de la demande: 20.04.2011
(62) Demande divisionnaire de: 06726028.1
(73) Titulaire: Coriolis Group, 56530 Quéven (FR)
(72) Inventeur: Hamlyn, Alexander, 56270, Ploemeur (FR); Hardy, Yvan, 56270 Ploemeur (FR)

(56) Documents cités:
- WO-A-02/070232
- WO-A1-03/029379
- DE-A1- 3 743 485
- US-A- 4 494 436
- US-A- 4 735 672

## Description

La présente invention concerne une machine d'application de fibres comprenant une tête d'application de fibres avec un rouleau d'application pour la réalisation de pièces en matériaux composites. La présente invention concerne plus particulièrement une machine d'application équipée.

Il est connu, notamment par le document EP 0 626 252, des machines d'application de fibres, appelées couramment machine de placement fibres, pour l'application sur un moule d'une bande formée de plusieurs fibres pré-imprégnées de résine, le rouleau d'application venant en contact contre le moule pour appliquer la bande. La machine comprend un portique sur lequel est montée une tête d'application pour permettre son déplacement selon plusieurs axes. Des bobines de fibres pré-imprégnées sont montées sur un cantre assemblé au robot, et acheminées depuis ce cantre vers le rouleau d'application de la tête d'application par des systèmes spécifiques d'acheminement et de guidage. En raison de l'aspect collant des résines, ces systèmes d'acheminement et de guidage sont de conception particulièrement complexe et ont tendance à s'encrasser.

Pour garantir un déroulage correct des fibres pré-imprégnées, ainsi qu'une largeur de fibre sensiblement constante, les fibres sont mises en bobine avec un film séparateur. Les fibres pré-imprégnées ont une durée de vie limitée à température ambiante, et doivent être stockées à des températures de l'ordre de -15°C. La machine de placement doit intégrer des systèmes de retrait du film séparateur qui doivent garantir un retrait total et fiable du film séparateur pour éviter tout risque de pollution de la pièce fabriquée.

Les machines de placement actuelles se révèlent particulièrement encombrantes et coûteuses. Les différents éléments embarqués sur les différents axes de déplacement du portique ou dans la tête de placement, tels que le cantre de bobines, les systèmes d'acheminement et de guidage, de refroidissement, de retrait du film, sont encombrants et lourds, et limitent la vitesse d'application des fibres. Les machines ne permettent pas de placer des fibres dans des pièces de petites dimensions ou sur certains moules femelles du fait de l'encombrement et des courses limitées des différents axes.

Les fibres pré-imprégnées peuvent présenter des caractéristiques mécaniques non optimales, les filaments constituant la fibre pouvant être coupés ou discontinus quand la fibre provient d'une bande pré-imprégnée unidirectionnelle refendue, communément appelée "slit tape".

Les fibres pré-imprégnées déposées sur les moules doivent subir des compactages intermédiaires pour évacuer progressivement l'air emprisonné entre les plis de fibres déposées. Ces compactages se font soit par la mise en place d'une bâche à vide, soit par une pression continue de la tête de placement de fibres sur le moule, soit par une combinaison des deux méthodes. Dans les deux cas, les temps de cycle sont rallongés et la machine doit être dimensionnée pour exercer cette pression.

Pour la réalisation de la pièce composite, les fibres pré-imprégnées sont soumises à une opération de polymérisation sous vide ou en autoclave. Pour garantir un faible taux de porosité dans le composite final il est nécessaire d'effectuer une polymérisation en autoclave, ce qui augmente considérablement les coûts de mise en oeuvre.

Dans le cas de fibres stockées en bobine, les cantres embarqués comprennent un système de déroulage motorisé associé à chaque bobine. Chaque système de déroulage est asservi en fonction de la vitesse de la fibre pour limiter sa tension au niveau du rouleau d'application afin de garantir notamment son positionnement à plat sur les surfaces concaves des moules. Chaque système de déroulage est également asservi en fonction des déplacements du robot pour permettre notamment une récupération de mou par rembobinage de la fibre. De tels systèmes de déroulage présentent un encombrement et un coût importants et, limitent de manière significative la vitesse de déroulage des bobines en raison des contraintes d'asservissement, et donc les vitesses de dépose des fibres.

Le document WO02/070232 décrit une tête d'application de fibres selon le préambule de la revendication 1, ladite tête d'application, étant destinée à être montée à l'extrémité d'un dispositif de déplacement, comprenant un rouleau d'application, des moyens de guidage des fibres sur ledit rouleau d'application, et comprenant des moyens d'application de résine sur chaque fibre. Lesdits moyens d'application sont aptes à appliquer de la résine sur les fibres au niveau d'un des rouleau des moyens d'épanouissement qui se situent en aval des moyens de guidage et en amont des moyens d'application. Le document FR 2 624 786 décrit une tête d'application de fibres, destinée à être montée à l'extrémité d'un dispositif de déplacement, comprenant un rouleau d'application, des moyens de guidage des fibres sur ledit rouleau d'application, et des moyens d'application de résine sur chaque fibre, lesdits moyens d'application sont aptes à appliquer de la résine sur les fibres dans des moyens de guidage.

Le but de la présente invention est de pallier au moins à l'un des inconvénients précités en proposant notamment une machine d'application de fibres qui soit d'encombrement réduit, simple de conception, et de coût réduit.

La présente invention a pour objet une tête d'application de fibres, telle que définie aux revendications 1 à 10, ainsi qu'une machine d'application de fibres équipée d'une telle tête d'application, avec ou sans système limiteur de tension, telle que définie aux revendications 11 à 14.

Ladite machine est équipée d'une tête permettant une imprégnation de résine en ligne des fibres sèches, les moyens d'application de résines sont alors intégrés dans la tête d'application de fibres, et sont aptes à appliquer de la résine sur les fibres en sortie des moyens de guidage. La tête d'application de fibres permet la mise en oeuvre de fibres sèches et de résine, les fibres sèches étant enduites de résine juste avant leur dépose sur un moule. Les fibres peuvent être conditionnées sans film séparateur, par exemple sous forme de pelotes, de bobines ou dans des cartons. L'application de la résine en aval des moyens de guidage évite tout risque d'encrassement de ces derniers, et permet en outre de proposer des moyens de guidage simples de conception et peu encombrants. La tête d'application permet d'enduire de résine les fibres pour l'obtention de structures formées de fibres partiellement imprégnées de résine, avec un taux de fibre déterminé, par exemple de 55% en volume de fibres, à partir desquelles seront réalisées des pièces composites suivant le procédé d'infusion d'un film de résine, appelé communément RFI (Resin Film Infusion). Ce procédé RFI, dans lequel la résine infuse à travers les fibres pour les imprégner, permet d'obtenir une pièce composite avec un faible taux de porosité, sans étape de polymérisation dans un autoclave. La tête d'application selon l'invention peut également être utilisée pour enduire les fibres en ligne avec une faible quantité de colle ou de résine, par exemple entre 5 et 20 g/m², juste suffisante pour assurer un maintien des fibres et réaliser une préforme sèche, à partir de laquelle sera réalisée une pièce composite selon le procédé d'injection ou d'infusion de résine dans une préforme sèche, appelé communément RTM (Resin Transfert Molding). Un tel procédé RTM, dans lequel la résine de la pièce finale est injectée ou infusée durant une phase ultérieure, permet d'utiliser des résines mises en oeuvre uniquement en moule fermé, par exemple des résines avec des composés organiques volatiles, et d'obtenir des états de surface spécifiques sur toutes les faces de la pièce finale. Il est également possible de combiner pour une même pièce composite les deux types d'application précités.

La machine selon l'invention offre la possibilité d'utiliser une grande variété de fibres, synthétiques ou naturelles, hybrides ou non, notamment des fibres couramment employées dans le domaine des composites, telles que les fibres de verre, les fibres de carbone, de quartz, et d'aramide, ainsi qu'une grande variété de résines thermodurcissables ou thermoplastiques, mono ou multi-composants, chargées ou non d'adjuvants tels que des nano-composites ou plastifiants améliorant leurs propriétés, en particulier des résines à haute viscosité permettant de faire adhérer les fibres sur les moules sans risque de coulure ou de glissement, et plus particulièrement des résines sans solvant, et notamment des résines thermofusibles à haute viscosité à froid qui imprégneront correctement les fibres durant une phase ultérieure d'infusion sous vide. La résine peut être conditionnée par exemple sous forme liquide, sous forme pâteuse ou sous forme solide, notamment en paillettes ou granulés.

Selon une autre particularité, les moyens d'application de résine comprennent une pluralité de canaux de distribution disposés en vis-à-vis dudit rouleau d'application pour appliquer de la résine sur la face des fibres opposée au rouleau d'application, lesdits moyens d'application étant aptes à enduire lesdites faces de résine sous la forme d'un film, d'épaisseur constante ou poreux, et/ou à déposer de la résine sur lesdites faces sous la forme d'un cordon. Les moyens d'application de résine comprennent avantageusement un canal de distribution par fibre, garantissant une présence de résine sur une seule face, sans débordement sur les bords, pour éviter tout problème de pollution du rouleau d'application, ainsi que des moyens de guidage, quelle que soit l'orientation de la tête d'application.

Lesdits moyens d'application de résine peuvent comprendre au moins une buse à lèvre équipée d'un clinquant définissant une pluralité de canaux de distribution, et/ou une pluralité de buses tubulaires, définissant chacune un canal de distribution pour une fibre, éventuellement jetables, montées par exemple sur une même rampe.

Selon une autre particularité, la machine comprend des moyens de dosage aptes à alimenter en résine lesdits moyens d'application de résine de la tête de placement à un débit régulé en fonction de la vitesse de déplacement des fibres, lesdits moyens de dosage étant asservis par une unité de commande de la machine. Les moyens de dosage peuvent être embarqués dans la tête d'application ou disposés sur le système de déplacement, par exemple le long du bras du robot. Lesdits moyens de dosage peuvent comprendre au moins une pompe volumétrique comportant une chambre de dosage avec un orifice de refoulement, un piston mobile dans la chambre de dosage, et des moyens d'actionnement dudit piston, tel qu'un vérin hydraulique ou électrique, asservis par l'unité de commande.

Selon une autre particularité, la machine comprend en outre des moyens de stockage et d'alimentation aptes à stocker de la résine et à alimenter en résine lesdits moyens de dosage. Les moyens de stockage et d'alimentation en résine seront adaptés aux différents conditionnements et volumes des résines utilisées. Les moyens de stockage et d'alimentation en résine peuvent comprendre des fondoirs, vides fûts, ou pots en pression, éloignés de la tête grâce à l'acheminement de la résine dans au moins un tube d'acheminement maintenu le long du système de déplacement sans limiter les mouvements des différents axes du système de déplacement. Dans le cas de résines multi-composants, chaque composant est acheminé dans son propre tuyau et le mélange est effectué au niveau de la tête d'application. Ces moyens de stockage peuvent être disposés au sol ou embarqués sur un élément du système de déplacement, par exemple sur un axe linéaire au moyen d'un chariot.

Avantageusement, la tête d'application comprend des moyens de coupe aptes à couper, éventuellement individuellement, les fibres, et des moyens de ré-acheminement aptes à ré-acheminer, éventuellement individuellement, chaque fibre venant d'être coupée, lesdits moyens de coupe et moyens de ré-acheminement étant disposés en amont des moyens d'application de résine. Selon un mode de réalisation, lesdits moyens de guidage comprennent pour chaque fibre, des conduits, de préférence de section transversale circulaire, entre lesquels les moyens de coupe et les moyens de ré-acheminement sont disposés. L'absence de résine sur les fibres permet d'utiliser de simples conduits de sections circulaires, pouvant comprendre des parties coudées.

Selon un mode de réalisation, les moyens de ré-acheminement comprennent des systèmes d'entraînement à galets et contre-galets, et des moyens d'injection d'air pour injecter de l'air comprimé ou tout autre type de gaz dans l'un desdits conduits de guidage, afin de créer un flux d'air en direction du rouleau d'application d'aval en amont, lesdits moyens étant disposés par exemple en aval des moyens de coupe pour aspirer les fibres venant d'être coupées. Le flux d'air est de préférence climatisé, à savoir régulé en température et/ou en hygrométrie, et purifié pour éviter toute pollution des fibres.

Selon une particularité, la tête de placement comprend en outre des moyens de refroidissement pour refroidir la résine venant d'être appliquée sur les fibres afin d'éviter qu'elles adhèrent au rouleau d'application. Les moyens de refroidissement sont aptes à refroidir, par exemple via un flux d'air froid, le rouleau d'application afin de refroidir les fibres venant contre ledit rouleau d'application en aval des moyens d'application et/ou directement les fibres, en aval ou en amont des moyens d'application.

Le système de déplacement est apte à déplacer la tête d'application selon au moins trois directions perpendiculaires les unes aux autres. Ledit système de déplacement comporte par exemple un robot comprenant un poignet ou bras poly-articulé à l'extrémité duquel est montée ladite tête d'application. Le système de déplacement peut être formé par exemple par un robot standard de type poly-articulé, disposé au sol ou monté sur axe linéaire ou un portique.

Les moyens de stockage de fibres peuvent comprendre des étagères dans le cas de fibres conditionnées sous forme de pelotes ou dans des cartons, et/ou un cantre dans le cas de fibres conditionnées sous forme de bobines. Ces moyens de stockage peuvent être disposés au sol, par exemple dans le cas où le robot est fixe, ou être montés sur un élément du système de déplacement, tel qu'un chariot sur un axe linéaire.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence au dessin schématique annexé sur lequel :
- la figure 1 est une vue en perspective d'une machine de placement selon un premier mode de réalisation ;
- la figure 2 est une vue schématique agrandie de côté de la tête de placement de la machine de la figure 1 ;
- les figures 3 et 4 sont deux vues agrandies en perspective des éléments constitutifs de la tête de placement de la figure 2 ;
- la figure 5 est une vue agrandie et en coupe des moyens de guidage de la figure 2 ;
- la figure 6 est une vue selon le plan de coupe VI-VI de la figure 5 ;
- la figure 7 est une vue en perspective des éléments constitutifs du système limiteur de tension selon un premier mode de réalisation ;
- la figure 8 est une vue selon le plan de coupe VIII-VIII de la figure 7 ;
- la figure 9 est une vue en perspective des éléments constitutifs du système limiteur de tension selon un deuxième mode de réalisation ;
- la figure 10 est une vue en coupe longitudinale du système limiteur de tension de la figure 9, perpendiculairement aux cylindres;
- la figure 11 est en coupe transversale du système limiteur de tension de la figure 9, selon l'axe d'un des cylindres;
- les figures 12, 13 et 14 sont respectivement des vues agrandies des détails C1, C2 et C3 des figures 9, 10 et 11 ;
- la figure 15 est une vue schématique en perspective d'une machine de placement selon un deuxième mode de réalisation ;
- la figure 16 est une vue schématique en perspective d'une machine de placement selon un troisième mode de réalisation ; et,
- la figure 17 est une vue partielle agrandie en perspective de la figure 16.

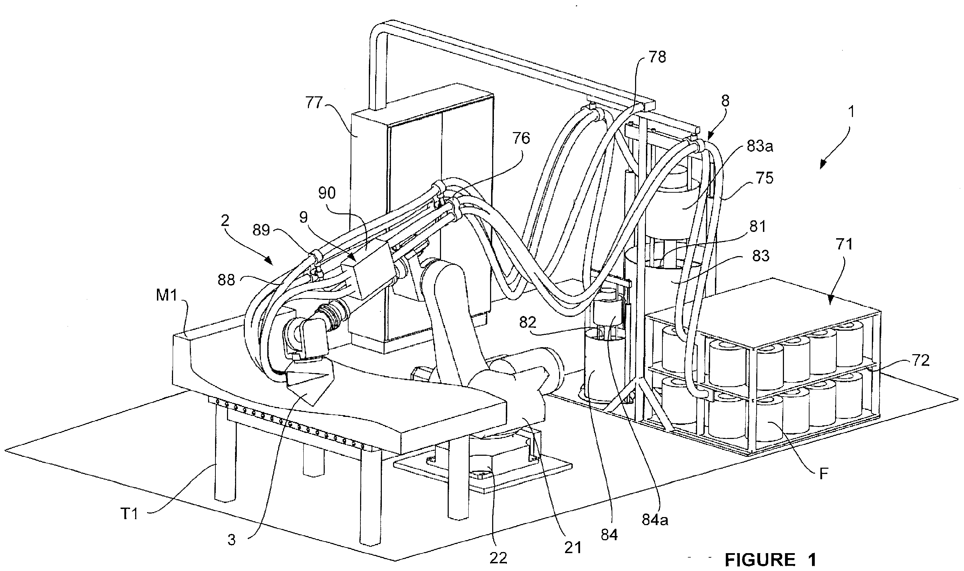

En référence à la figure 1, la machine de placement 1 comprend un dispositif de déplacement formé d'un robot 2 de type six axes, connu en soi, une tête de placement 3 montée à l'extrémité du bras polyarticulé 21 du robot, des moyens de stockage de fibres, des moyens d'acheminement des fibres depuis lesdits moyens de stockage vers la tête de placement, des moyens de stockage de résine 8, et un système limiteur de tension 9.

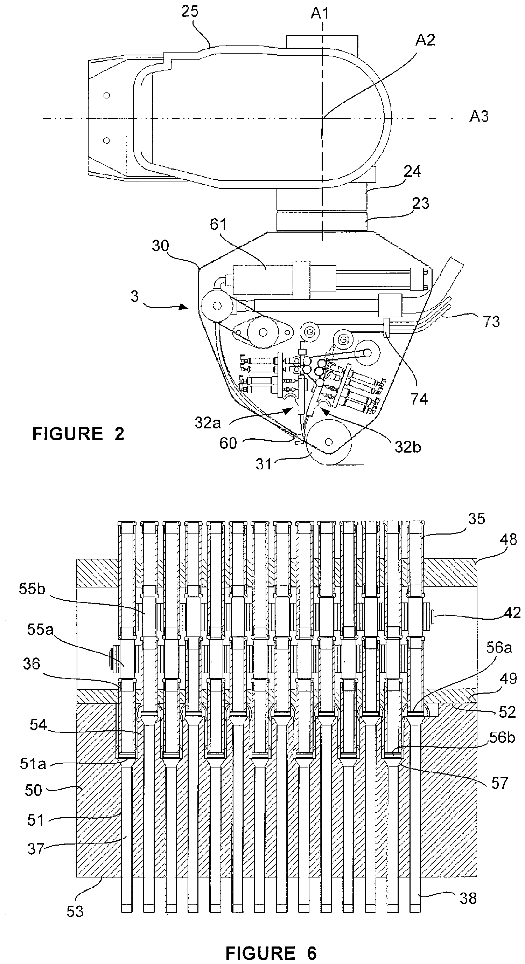

Le robot comprend une embase fixe 22 disposée à proximité de moyens de support, formés d'une table de réception T1, supportant un moule M1 sur lequel doit être réalisée la pièce composite. Le bras du robot est monté mobile en rotation sur cette embase et comprend différentes portions montées rotatives les unes aux autres. La partie poignet du bras, représentée sur la figure 2, comprend les trois derniers tronçons du bras 23, 24, 25 assemblés autour d'axes de rotation A1, A2, dont une platine d'assemblage 25 en extrémité. La partie poignet est montée rotative sur le reste du robot selon un axe A3. La tête de placement 3 est montée de manière fixe sur la platine d'assemblage selon l'axe A1, appelé également axe d'assemblage.

Dans le présent mode de réalisation, les fibres F sont de type fibres de verre, et sont conditionnées sous forme de pelotes se déroulant par le centre. Les moyens de stockage de fibres sont formés par de simples étagères 71 disposées au sol à proximité de l'embase du robot, les pelotes de fibres étant posées côte à côte sur les plateaux 72 des étagères. En variante, des fibres textiles sont conditionnées dans des cartons rangés sur les plateaux des étagères. Pour que les fibres ne se chargent pas d'électricité statique et qu'elles s'assouplissent, il peut être prévu des moyens de régulation hygrométrique au niveau desdits moyens de stockage, par exemple pour l'obtention d'une hygrométrie régulée à environ 70 % d'humidité relative.

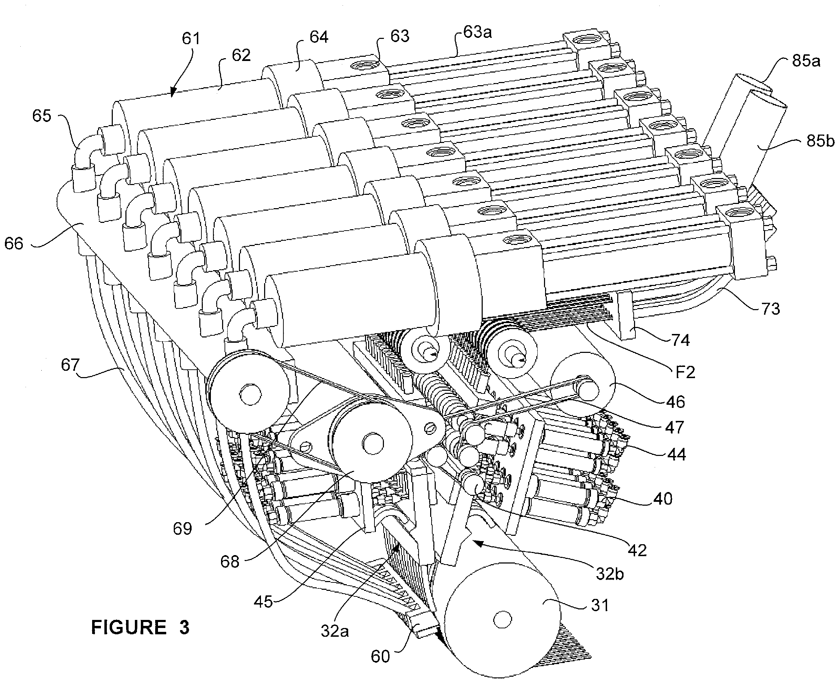

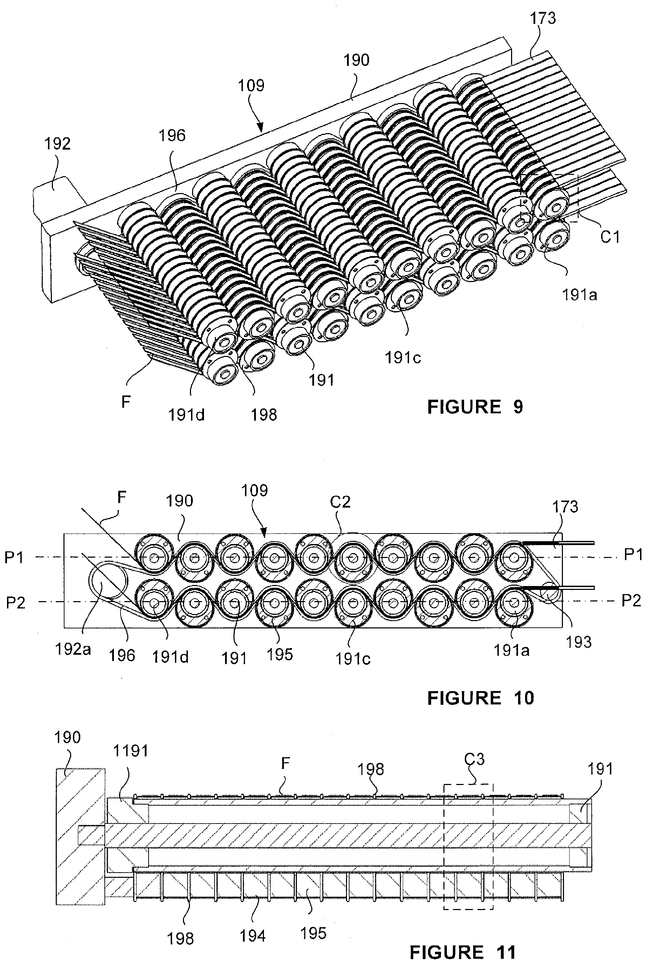

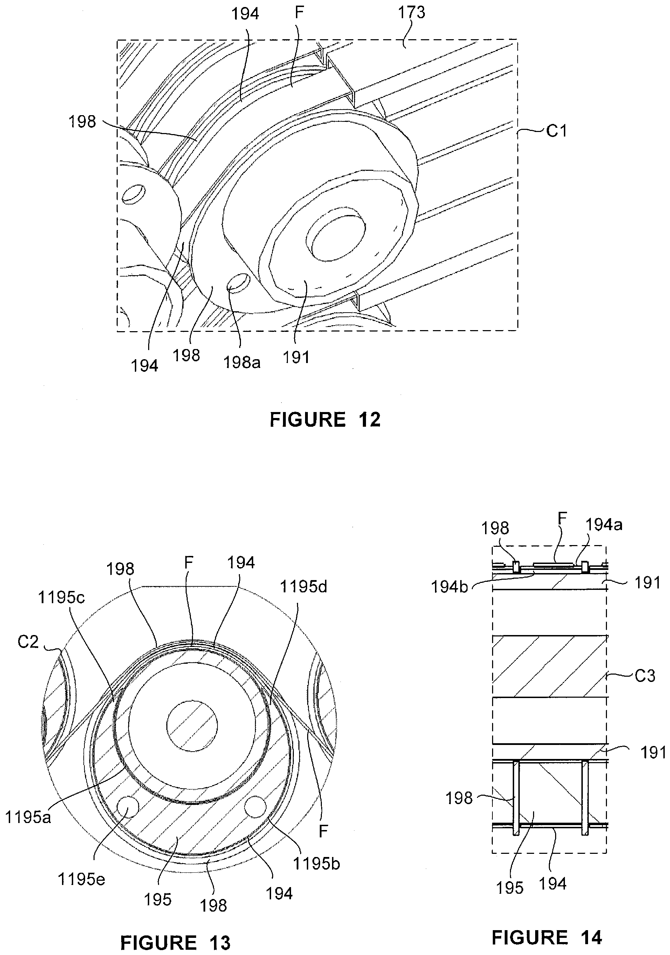

Les fibres sont acheminées individuellement des étagères vers la tête de placement dans des tubes d'acheminement flexibles 73, représentés schématiquement sur les figures 2 à 5. Les tubes d'acheminement sont raccordés en extrémité à des rampes au moyen de connexions rapides. Une rampe 74 est montée sur le carter 30 de la tête de placement, les tubes d'acheminement 73 étant assemblés sur la rampe selon deux rangées superposées pour former deux nappes de fils, une première nappe de fibres F1 et une seconde nappe de fibres F2. Une rampe est également prévue pour la fixation des tubes d'acheminement au niveau de chaque plateau de l'étagère. Les tubes d'acheminement ont une longueur et une flexibilité suffisantes pour ne pas limiter les déplacements du robot et de la tête de placement. Pour leur protection et leur maintien sur le long du bras du robot, les tubes d'acheminement sont passés dans des tuyaux 75 maintenus sur le bras par des attaches 76 couramment utilisées dans le domaine de la robotique, par exemple dans deux tuyaux, chaque tuyau rassemblant un faisceau de tubes d'acheminement correspondant à une nappe de fibres F1, F2. Les tubes d'acheminement sont réalisés en un matériau qui ne cassent pas les fibres, ne chargent pas les fibres en électricité statique, engendrent peu de frottement, ne créent pas de tours, résistent à l'usure et possèdent une bonne tenue en fatigue et en flexions répétées. Dans ce mode de réalisation, les tubes d'acheminement ont une section circulaire, leur diamètre étant adapté au titre des fibres. Pour des fibres de 600 à 2400 tex, les tubes d'acheminement ont par exemple un diamètre interne de 8 mm et un diamètre externe de 10 mm. Les tubes d'acheminement sont réalisés en un matériau polymère, tel qu'un polyéthylène haute densité (PEHD) naturel, comprenant un adjuvant antistatique. Selon une variante de réalisation décrite ci-après en référence aux figures 9 et 13, les tubes d'acheminement présentent une section rectangulaire.

En référence aux figures 2 à 5, la tête de placement 3 comprend un carter 30 dans lequel sont montés un rouleau souple d'application 31, et deux systèmes de conduits de guidage 32a, 32b, décalés angulairement, pour guider les deux nappes de fibres en direction du rouleau d'application, ces deux nappes étant amenées tangentiellement au rouleau d'application de sorte que les fibres d'une nappe viennent s'intercaler entre les fibres de l'autre nappe pour former une bande de fibres. Le rouleau d'application est monté rotatif entre deux flasques du carter. Il est fabriqué en un matériau élastomère revêtu d'un matériau antiadhésif, par exemple en Téflon.

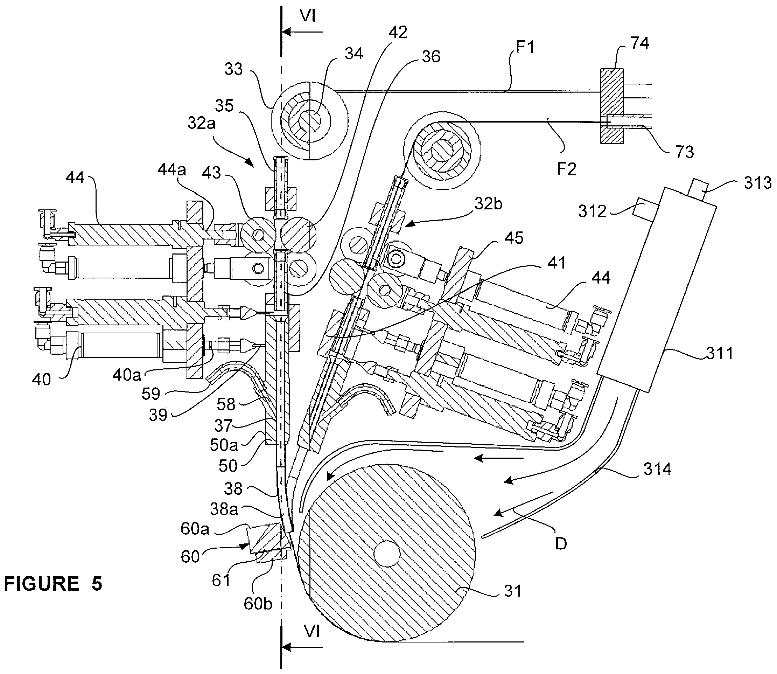

Chaque nappe de fibres est dirigée de la rampe 74 vers son système de guidage par un jeu de poulies de renvoi 33 montées folles sur un axe 34 assemblé dans le carter parallèlement à l'axe du rouleau d'application. Un premier système de guidage 32a, destiné à guider la première nappe de fibre F1, est disposé parallèlement à l'axe d'assemblage A1 de la tête de placement sur la platine, à savoir verticalement sur les figures 2 et 5, le second système de guidage 32b étant disposé au-dessus du rouleau d'application, à environ 15° du premier système de guidage. Pour chaque système de guidage, chaque fibre passe dans différents conduits 35-38 alignés et écartés longitudinalement les uns des autres pour la disposition d'un système de coupe individuelle et d'un système de ré-acheminement individuel. Chaque système de coupe comprend une lame plane 39 montée à l'extrémité de la tige 40a d'un vérin pneumatique 40, en vis à vis d'un contre-outil 41. Le vérin pneumatique est apte à déplacer la lame entre deux conduits 36 et 37, entre une position de repos dans laquelle la lame est écartée de la fibre et une position active dans laquelle la lame vient en butée contre le contre-outil pour couper la fibre.

Chaque système de ré-acheminement comprend un galet d'entraînement 42 et un contre-galet 43 en élastomère monté à l'extrémité de la tige 44a d'un vérin pneumatique 44. Le vérin est apte à déplacer le contre-galet, entre deux conduits 35 et 36, entre une position de repos dans laquelle le contre-galet est écarté de la fibre et une position active dans laquelle le contre-galet vient plaquer la fibre contre le galet d'entraînement pour faire avancer la fibre.

Pour des raisons d'encombrement, les systèmes de ré-acheminement sont disposés en quinconce selon deux rangées parallèles superposées. De même, les systèmes de coupe sont disposés en quinconce selon deux rangées superposées, en aval des systèmes de ré-acheminement. Les vérins de commande 40, 44 des systèmes de ré-acheminement et des systèmes de coupe sont montés perpendiculairement sur une même plaque support 45 disposée parallèlement aux conduits de son système de guidage associé, et du côté desdits conduits opposés à l'autre système de guidage. Les galets d'entraînement des systèmes de ré-acheminement d'une même rangée sont formés par un seul rouleau d'entraînement 42. Pour les deux nappes de fibre, la tête comprend quatre rouleaux regroupés entre les systèmes de guidage et entraînés en rotation via une courroie 47 par un seul moteur 46 embarqué dans la tête de placement.

Dans le mode de réalisation illustré sur les figures, chaque fibre passe dans un premier conduit dit d'entrée 35, puis un premier conduit intermédiaire 36 et un second conduit intermédiaire 37, et enfin dans un conduit de sortie coudé 38. En référence à la figure 6, les conduits d'entrée sont formés de tubes métalliques de section circulaire montés parallèlement les uns aux autres sur une même première barre support 48 solidaire du carter. Les seconds conduits intermédiaires sont formés par une plaque parallélépipédique 50 munie de perçages 51 de section circulaire débouchant sur les deux bords longitudinaux parallèles 52, 53 de la plaque. La plaque comprend sur l'un de ses bords, dit supérieur 52, un ensemble de dents 54 de sorte que les perçages débouchent sur deux niveaux différents, le décalage longitudinal des orifices d'entrée 51a de deux perçages adjacents correspondant au décalage longitudinal de deux systèmes de coupe adjacents. Les premiers conduits intermédiaires 36 sont formés de tubes métalliques de section circulaire montés parallèlement les uns aux autres sur une seconde barre support 49, assemblée sur le bord supérieur 52 de la plaque 50. Les premiers conduits intermédiaires, de longueurs identiques, sont écartés d'une part des premiers conduits pour définir deux ensembles d'espaces 55a et 55b, disposés en quinconce, pour le passage des contre-galets des deux rangées de systèmes de ré-acheminement, et d'autre part des orifices d'entrée pour définir deux ensembles d'espaces 56a, 56b, disposés en quinconce, pour le passage des lames des deux rangées de systèmes de coupe. Chaque perçage présente au niveau de son orifice d'entrée 51a une fraisure définissant une paroi tronconique de guidage 57 pour faciliter le ré-acheminement de la fibre venant d'être coupée. Les contre-outils 41 des systèmes de coupe des fibres d'une même nappe sont constitués par une seule et même contreplaque fixée sur la face de la plaque opposée aux vérins de commande. Les conduits de sortie 38 sont formés de tubes métalliques de section circulaire emmanchés dans les perçages 51 par le bord inférieur 53 de la plaque, jusqu'aux fraisures. Ces tubes de sortie présentent des parties d'extrémité coudées 38a. Les parties coudées du premier système de guidage viennent s'intercaler entre celles du deuxième système de guidage de sorte que les orifices de sortie des conduits de sortie soient sensiblement alignés. Les conduits de sortie présentent une épaisseur de paroi faible pour que les fibres issues des deux systèmes de guidage forment une bande de fibres dans laquelle les fibres sont disposées sensiblement bord à bord. Dans le présent mode de réalisation, la bande comprend 28 fibres, chaque système de guidage acheminant 14 fibres. Lors de leur acheminement, les fibres peuvent être légèrement cintrées contre la paroi interne tubulaire des conduits de guidage. Bien entendu, deux systèmes de guidage pourraient être disposés de sorte qu'un seul d'entre eux possède des parties d'extrémité coudées, l'autre comprenant uniquement des conduits rectilignes.

En référence à la figure 5, la plaque support 50 comprend des canaux 58 d'alimentation en air comprimé débouchant sur les perçages et la face principale extérieure 50a. Ces canaux sont alimentés individuellement en air comprimé climatisé par des conduites 59, partiellement représentées sur les figures 2 à 5, et sont orientés de manière à former un flux d'air en direction des conduits de sortie, pour aspirer les fibres venant d'être coupées. En variante, ces canaux d'alimentation en air comprimé sont disposés en amont des moyens de coupe, par exemple au niveau des premiers tubes intermédiaires 36, le flux d'air permettant alors d'orienter les fibres vers les orifices d'entrée des perçages.

Une buse 60 est montée dans le carter par exemple par ses extrémités, parallèlement au rouleau d'application, pour enduire de résine chaque fibre en sortie des conduits de sortie. La buse, communément appelée buse à lèvre, comprend de manière connue en soi deux barres 60a, 60b enserrant un clinquant. Le clinquant est muni de fentes transversales, régulièrement espacées s'étendant jusqu'à son bord longitudinal extérieur pour former des canaux de distribution, sur lesquels débouche une gorge longitudinale formée sur la face interne de contact de l'une 60a des deux barres.

Dans le présent mode de réalisation, la gorge longitudinale est séparée, par exemple au moyen de plot en élastomère, en sept tronçons débouchant chacun sur quatre canaux de distribution. La barre supérieure comprend sept canaux transversaux débouchant sur la gorge longitudinale et reliés par des conduites d'alimentations 67 à des pompes de dosage 61, appelées également pompes volumétriques, pour alimenter individuellement en résine chaque tronçon de la gorge.

Chaque pompe de dosage 61 comprend un cylindre 62, délimitant une chambre de dosage et muni à une première extrémité d'un orifice de refoulement pour la distribution de résine, un piston monté coulissant dans la chambre de dosage par la deuxième extrémité ouverte du cylindre, et un actionneur apte à déplacer linéairement ledit piston. L'actionneur est constitué d'un vérin hydraulique ou d'un vérin électrique 63. Le corps 63a du vérin est assemblé sur le cylindre de la pompe par des moyens d'assemblage rapide, de type bague 64, et la tige du vérin s'étend dans la chambre de dosage et porte en extrémité le piston de la pompe. Les orifices de refoulement des pompes sont connectés via des conduites de sortie 65 à un système de vannes à deux positions 66, communément appelé nourrice de distribution. Cette nourrice de distribution permet d'une part, dans une première position, de relier individuellement les pompes de dosage aux conduites d'alimentation 67 connectées à la buse pour alimenter les différents tronçons de la buse, et d'autre part, dans une deuxième position, de relier lesdites conduites de sortie 65 à une entrée commune 66a de la nourrice connectée à des moyens de stockage et d'alimentation en résine pour ré-alimenter les pompes de dosage en résine. Le déplacement de la nourrice de distribution entre ses deux positions est effectué par un moteur embarqué 68 via une courroie 69.

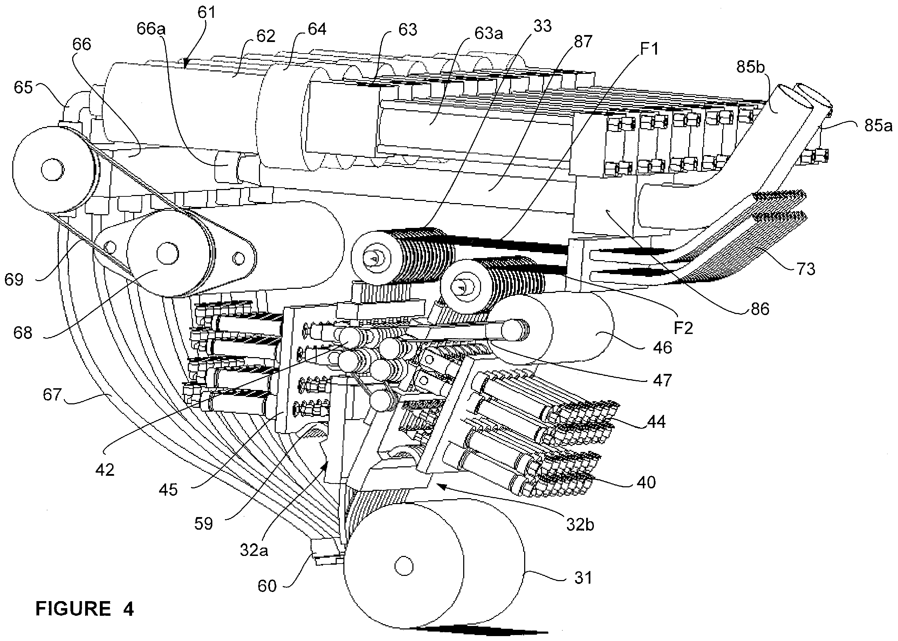

Dans ce mode de réalisation, les moyens de stockage et d'alimentation en résine sont prévus pour la mise en oeuvre d'une résine à deux composants. Chaque composant est stocké dans un fût 81, 82 placé dans un vide-fût 83, 84, connu en soi, intégrant des pompes 83a, 84a et est acheminé dans son propre tube d'alimentation 85a, 85b (figure 4) vers la tête de placement. Les tubes d'alimentation sont connectés aux entrées d'une vanne bi-composant 86, disposée en amont d'un mélangeur statique 87 qui garantit un mélange homogène des deux composants, ce mélangeur statique étant connecté en sortie à l'entrée 66a de la nourrice de distribution. Pour leur protection et leur maintien le long du robot, les tubes d'alimentation de résine sont passés dans des tuyaux 88 (figure 1) maintenus par des attaches 89 analogues à celles 76 utilisées pour les tubes d'acheminement de fibres.

La tête de placement comprend des moyens de refroidissement pour refroidir le rouleau d'application, afin de refroidir les fibres venant contre ledit rouleau en sortie de buse et ainsi éviter que la résine adhère au rouleau d'application. Tel que représenté schématiquement sur la figure 5, les moyens de refroidissement comprennent un pistolet d'air froid 311 disposé au dessus du rouleau d'application 31. Ce pistolet d'air froid, de type vortex, est alimenté en air comprimé via une entrée 312. Cet air comprimé, par exemple sous une pression de l'ordre de 6 bars, est converti en un flux d'air chaud expulsé vers l'extérieur via une sortie 313, et un flux d'air froid, à environ - 40°C, schématisé par les flèches référencée D, dirigé vers le rouleau d'application par une tuyère ou déflecteur 314. Le déflecteur, en tôle métallique ou en matériau plastique, s'étend sensiblement sur toute la longueur du rouleau d'application pour permettre le refroidissement de l'ensemble de la bande de fibres. Le déflecteur peut être écarté du rouleau d'application pour former avec ce dernier un passage permettant d'orienter le flux d'air froid D en direction des fibres, en aval des conduits de sortie 38. De préférence, le déflecteur vient sensiblement au niveau de la surface du rouleau d'application, un éventuel refroidissement direct des fibres étant réalisé par l'intermédiaire du flux d'air comprimé provenant des canaux 58 précités.

En fonction du type de résine à appliquer, la tête de placement comprend avantageusement des moyens de chauffage pour chauffer à sa température d'utilisation la résine circulant dans la tête de placement, avant son application sur les fibres. Ces moyens de chauffage, non représentés sur les figures, se présentent par exemple sous la forme de résistances électriques intégrées dans des fourreaux et disposées autour des pompes de dosage 61, de la nourrice de distribution 66, du mélangeur statique 87, des conduites d'alimentation 67 et de la buse 60.

La machine comprend une unité de commande, par exemple disposée dans une armoire de commande 77, apte à commander les déplacements du robot selon des séquences programmées, ainsi que les vérins des systèmes de coupe, des systèmes de ré-acheminement, et des pompes de dosage, ainsi que le moteur de commande des rouleaux d'entraînement, le moteur de commande de la nourrice de distribution, et les moteurs et pompes des vides fûts. Les circuits électriques, pneumatiques et/ou hydrauliques pour la commande des systèmes embarqués dans la tête de placement sont disposés dans un tuyau 78 s'étendant de la tête de placement à l'armoire de commande, le long du bras du robot.

En fonction de la pégosité et de la viscosité de la résine, ainsi que du taux de fibre et de la quantité de résine à déposer la résine sera appliquée sous la forme d'un film, poreux ou non, par contact entre les fibres et la buse ou sous la forme d'un cordon, sans contact entre la fibre et la buse. La buse peut être montée mobile entre une position rétractée et une position active, le déplacement entre ses positions étant par exemple commandé par un système de vérin. Les fibres peuvent être passées sur une barre d'embarrage pour une meilleure mise à plat, bord à bord, des fibres de la nappe, avant leur passage sur le rouleau d'application, et de préférence avant l'application de la résine.

Les vitesses d'avancement des tiges des vérins des pompes de dosage sont contrôlées par l'unité de commande de la machine robot afin de réguler le débit en fonction de la vitesse de défilement des fibres, et ainsi garantir un taux de résine sensiblement constant sur toute la longueur des fibres, et notamment un cordon de section constante, quelles que soient les vitesses et les directions de déplacement du robot.

Dans le présent mode de réalisation, chaque pompe de dosage est utilisée pour l'application de résine sur quatre fibres adjacentes. Ainsi les vérins des systèmes de coupe et de ré-acheminement sont asservis par groupe de quatre. Lors d'une opération de coupe de quatre fibres, les vérins des quatre systèmes de coupe adjacents correspondants sont commandés pour amener les lames vers leur position active. En raison de leur décalage longitudinal, les commandes de deux systèmes de coupe adjacents seront légèrement décalées dans le temps. Après une temporisation, qui est fonction des vitesses de déplacement des quatre fibres venant d'être coupées, l'avancement du vérin de la pompe de dosage associée à ces fibres est stoppé. Pour éviter un problème de gouttes de résine en sortie de buse sur les fibres, le vérin de la pompe de dosage est avantageusement commandé pour déplacer le piston de la pompe en sens inverse. Les vérins des contre-galets des quatre systèmes de ré-acheminement sont ensuite actionnés pour presser les fibres contre les galets d'entraînement 42 correspondants, et les ré-acheminer vers le rouleau d'application, par exemple juste en amont de la buse. Lors de ce ré-acheminement de l'air comprimé est injecté dans les canaux correspondants 58. L'injection d'air comprimé peut être également effectuée en continu, dès la mise en marche de la machine.

En variante, l'application de résine est réalisée de façon indépendante sur chaque fibre par une pompe de dosage individuelle, le vérin de chaque pompe étant alors asservi en fonction de la vitesse de défilement de la fibre. Les systèmes de coupe et de ré-acheminement peuvent alors être asservis de manière totalement indépendante.

La ré-alimentation de l'ensemble des pompes de dosage pourra être effectuée entre deux phases de drappage, dès que l'une des pompes de dosage descend en dessous d'un seuil de remplissage déterminé. Le remplissage des chambres de dosages est obtenu par la mise en marche des pompes intégrées aux vides-fûts, et commande du moteur 68 pour déplacer la nourrice de distribution vers sa deuxième position, les vérins des pompes de dosage étant simultanément actionnés pour rétracter les pistons lors du remplissage. En variante, les pompes de dosage peuvent être ré-alimentées par des vannes trois voies pilotées individuellement par l'unité de commande.

Différents moyens de dosage et différents moyens d'application pourront être mis en oeuvre en fonction des propriétés des résines à doser, notamment leur réactivité, rhéologie, et viscosité. Lorsque la quantité de résine déposée est faible et/ou la résine a une réactivité importante, il peut être prévu une alimentation en résine au moyen de cartouches de résine jetables, pouvant être chargées dans les chambres de dosage des pompes de dosage précitées. Les cartouches jetables pourront être remplacées une fois vides. Dans ce cas, les pompes de dosage peuvent être reliées directement à la buse à lèvre, sans prévoir de nourrice de distribution pour ré-alimenter les pompes de dosage. La buse à lèvre peut être remplacée par des buses tubulaires jetables alignées les unes à côté des autres sur une rampe support, chaque fibre ayant sa propre buse alimentée de manière indépendante via une conduite d'alimentation par une pompe de dosage telle que décrite précédemment. Les pompes seront avantageusement déportées, en dehors de la tête de placement, sur le bras du robot, via vingt-huit conduites d'alimentation 67 de grande longueur s'étendant le long du bras du robot jusqu'aux buses tubulaires.

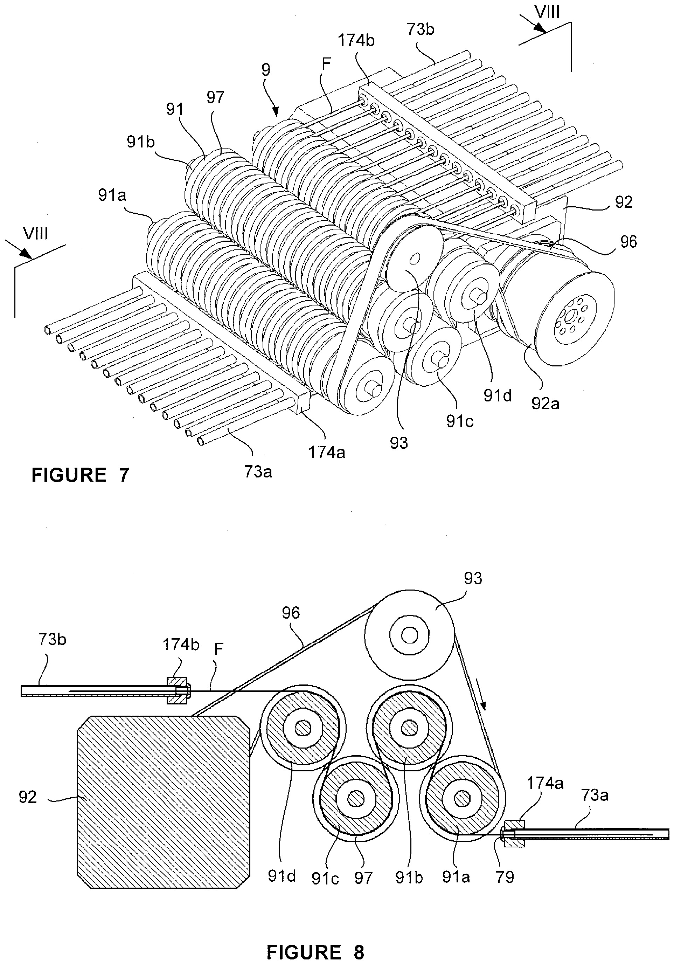

Un système limiteur de tension, appelé également pré-délivreur, est prévu pour exercer un effort de traction sur les fibres provenant des pelotes et limiter ainsi la tension d'appel des fibres au niveau du rouleau d'application 31. Dans le présent mode de réalisation, la machine comprend deux pré-délivreurs intercalés sur les tubes d'acheminement des fibres le long du bras articulé du robot, chaque pré-délivreur étant prévu pour traiter une nappe de quatorze fibres. En référence aux figures 7 et 8, chaque pré-délivreur 9 comprend un ensemble de cylindres motorisés 91, montés rotatifs parallèlement entre eux dans un carter, sur lesquels les fibres passent sans en faire le tour. Les deux pré-délivreurs peuvent être intégrés dans un même carter 90, tel qu'illustré sur la figure 1. Les fibres couramment utilisées dans les matériaux composites se présentent généralement sous la forme de rubans, avec ou sans tour. Chaque fibre vient en contact avec les cylindres par ses deux faces principales, sur des longueurs sensiblement identiques pour chacune de ses faces principales. Le contact des cylindres avec la face supérieure et la face inférieure de la fibre permet d'homogénéiser la force de frottement des cylindres sur la fibre et ainsi de garantir que tous les filaments constitutifs de la fibre seront entraînés.

Le nombre de cylindre et leur diamètre sont déterminés par la tension d'appel recherchée au niveau du rouleau d'application et en fonction des contraintes d'encombrement. La surface de contact et donc principalement la longueur de la fibre en contact avec les cylindres est fonction de la force de frottement recherchée. Dans le présent mode de réalisation, le pré-délivreur comprend quatre cylindres disposés en quinconce : un cylindre d'entrée 91a, un premier cylindre intermédiaire 91b, un second cylindre intermédiaire 91c et un cylindre de sortie 91d, le premier cylindre intermédiaire et le cylindre de sortie définissant un plan disposé parallèlement et au-dessus du plan défini par le cylindre d'entrée et le premier cylindre intermédiaire. Les cylindres sont entraînés en rotation par un moteur unique 92, asservi par l'unité de commande, au moyen d'une courroie 96 montée sur le pignon 92a du moteur et sur une portion d'extrémité de chaque cylindre, par l'intermédiaire d'une poulie de renvoi 93. En référence à la figure 8, le cylindre d'entrée 91a et le second cylindre intermédiaire 91c sont entraînés dans le sens horaire, le premier cylindre intermédiaire 91b et le cylindre de sortie 91d étant entraînés dans le sens antihoraire. Les tronçons 73a de tubes d'acheminement 73 venant des étagères sont raccordés à une rampe d'entrée 174a, équipée d'oeillets 79 et montée parallèlement aux cylindres, pour amener les fibres sur le rouleau d'entrée 91a sous la forme d'une nappe. Les fibres F viennent en contact par une première face sur le cylindre d'entrée 91a, sur un peu plus d'un quart de tour, puis par leur deuxième face sur le premier cylindre intermédiaire 91b, sur plus d'un demi-tour, puis par leur première face sur le second cylindre intermédiaire 91c, sur plus d'un demi-tour, et enfin sur le cylindre de sortie 91d par leur deuxième face sur plus d'un quart de tour. Les fibres passent ensuite dans des tronçons 73b de tube d'acheminement pour être acheminées vers la tête de placement, lesdits tronçons 73b étant montés sur une rampe de sortie 174b, analogue à la rampe d'entrée et sont rassemblés dans un tuyau de protection pour être raccordés en extrémité à la rampe 74 de la tête de placement.

Le moteur 92 est commandé par l'unité de commande de sorte que la vitesse périphérique des cylindres soit supérieure, par exemple de 30 %, à la vitesse de défilement de la fibre la plus rapide. Les cylindres seront entraînés à une vitesse continûment régulée pour être à tout moment sensiblement supérieure de 30% à la vitesse de défilement de la fibre la plus rapide. En variante, les cylindres sont entraînés à une vitesse constante, dès la mise en marche de la machine, qui sera déterminée en fonction des séquences programmées de drappage.

Les cylindres ont un aspect de surface lisse afin de ne pas détériorer les fibres, mais non poli afin d'adhérer suffisamment aux fibres lorsqu'une tension d'appel est exercée sur les fibres en sortie du pré-délivreur. A titre d'exemple, un traitement de surface de type anodisation dure de 45 microns sur un cylindre en aluminium usiné avec une rugosité Ra de 0.5pm assure une surface adéquate avec une tenue à l'usure élevée. Pour dérouler des pelotes de fibres de verre après 6 mètres de tube d'acheminement ou des bobines de fibres de carbone de 6 kg après 6 mètres de tube d'acheminement, 4 cylindres de 50 mm de diamètre permettent d'avoir une tension d'appel inférieure à 50 grammes. Avantageusement, les cylindres présentent des rainures annulaires 97, chaque fibre étant reçue individuellement dans une rainure de manière à garantir un positionnement précis des fibres sans contact entre elles.

En entrée des cylindres, les fibres peuvent être amenées sur une barre d'embarrage, disposé entre la rampe d'entrée 94 et le cylindre d'entrée 91a, pour freiner les fibres lorsqu'elles ont une tension trop faible ou non constante, et/ou supprimer leur mémoire de forme, notamment dans le cas de fibres de verre qui ont tendance à conserver la courbure de la pelote.

En fonction de la longueur des tubes d'acheminement et du type de fibre, un ou plusieurs systèmes limiteurs pour chaque fibre peuvent être nécessaires le long de leur acheminement jusqu'au rouleau d'application. Un pré-délivreur supplémentaire peut par exemple être prévu en sortie des étagères de stockage des pelotes et/ou directement dans la tête d'application. Bien entendu, il peut être prévu un pré-délivreur comprenant des rouleaux suffisamment longs pour recevoir l'ensemble des fibres à déposer, à savoir les 28 fibres des deux nappes de fibres F1 et F2 dans le présent mode de réalisation. Le pré-délivreur, intégré ici dans une machine de placement de fibres avec une imprégnation en ligne de fibres sèches, peut être utilisé pour le passage de fibres pré-imprégnées dans une machine de placement de fibres non équipée de moyens d'application de résine.

Les figures 9 à 14 illustrent un pré-délivreur 109 selon un deuxième mode de réalisation, permettant de traiter deux nappes de quatorze fibres F. Ce pré-délivreur 109 se différencie principalement du pré-délivreur 9 décrit précédemment par le fait que les fibres F ne viennent pas directement en contact avec les cylindres 191, une courroie 194 étant intercalée entre chaque cylindre et chaque fibre. Ce mode de réalisation est particulièrement avantageux pour le passage de fibres pré-imprégnées.

En référence aux figures 9 à 11, le pré-délivreur 109 comprend deux ensembles de cylindres motorisés 191, montés rotatifs parallèlement entre eux, en porte à faux sur un support 190, chaque ensemble de cylindre étant destiné au passage d'une nappe de fibres. Les cylindres d'un premier ensemble sont disposés les uns à la suite des autres, sensiblement selon un même plan P1, les cylindres du deuxième ensemble étant disposés selon un plan P2 parallèle au plan P1 du premier ensemble. Chaque ensemble comprend un cylindre d'entrée 191a, des cylindres intermédiaires 191c, par exemple au nombre de huit, et un cylindre de sortie 191d. Les cylindres des deux ensembles sont entraînés en rotation par un moteur unique 192, asservi par l'unité de commande, tel que décrit précédemment, au moyen d'une courroie 196 montée sur le pignon 192a du moteur et sur une portion d'extrémité 1191 (figure 11) de chaque cylindre, par l'intermédiaire d'une poulie de renvoi 193.

En référence aux figures 11 à 14, chaque cylindre est équipé de courroies 194 venant s'intercaler entre les fibres et le cylindre. Chaque courroie est montée autour du cylindre et d'une pièce ou sabot complémentaire de guidage 195 monté fixe sur le support. Pour limiter l'encombrement de l'ensemble, chaque sabot de guidage est formé d'un disque 1195 de forme générale en croissant de lune, de rayon supérieur à celui du cylindre, pourvu d'un évidement circulaire 1195a dont le rayon de courbure est adapté à celui du cylindre pour monter le disque autour du cylindre, sans contact entre le disque et le cylindre rotatif, avec ses portions d'extrémités 1195c, 1195d qui viennent tangentiellement s'adapter au cylindre. La courroie 194 est montée sur le bord circulaire périphérique 1195b du disque et sur la portion circonférentielle du cylindre non recouverte par le disque, définie entre les deux portions d'extrémités 1195c-d du disque. Les disques sont disposés à plat les uns contre les autres, en intercalant des flasques 198 entre deux disques adjacents et en plaçant des flasques contre les disques extérieurs, afin de guider les courroies et les fibres. L'assemblage des disques est réalisé au moyen de tiges (non représentées) traversant de part en part les disques et des flasques, en passant par des ouvertures traversantes 198a,1195e (figures 12 et 13) de ceux-ci, les tiges étant fixées en extrémité au support, parallèlement les unes aux autres. Les fibres passant au-dessus puis en-dessous de deux cylindres successifs, ou inversement, les deux ensembles de pièces de guidage associés à deux cylindres successifs sont disposés de part et d'autre du plan P1 des cylindres.

Pour deux cylindres successifs, chaque fibre vient à plat par une première face sur une courroie du premier cylindre, entre deux flasques 198, au niveau de la portion angulaire de contact entre la courroie et le cylindre, puis à plat par sa deuxième face sur une courroie du deuxième cylindre. Les courroies ont une largeur supérieure à celle des fibres, sensiblement égale à la distance entre deux flasques adjacentes, de manière à garantir que les fibres ne soient jamais en contact avec les cylindres en rotation.

Pour chaque cylindre, en l'absence de tension d'appel sur une fibre, la courroie est en contact glissant avec le cylindre. Lorsqu'une fibre est soumise à une tension d'appel au niveau du rouleau d'application, la fibre exerce une pression sur la courroie, cette dernière est alors entrainée en rotation par le cylindre, entrainant ainsi la fibre qui adhère à la courroie. La face de la courroie côté fibre présente un coefficient d'adhérence permettant à la courroie de rester au contact de la fibre, la vitesse relative entre la courroie et la fibre étant nulle ou très faible. La face de la courroie côté cylindre présente un coefficient de friction permettant à la courroie d'être entraînée par le cylindre quand la fibre exerce une pression. Cette face présente avantageusement une tenue à l'usure élevée, ainsi qu'une propriété antistatique. Tel qu'illustré schématiquement sur la figure 14, la courroie est avantageusement composée de deux couches 194a, 194b constituées de matériaux différents. A titre d'exemple, la couche côté fibre est constituée d'un élastomère tendre tandis que la couche côté cylindre est constituée d'un élastomère dur.

Chaque courroie est en contact avec un cylindre sur une portion angulaire permettant d'une part d'entraîner la fibre quand celle-ci exerce une pression, d'autre part de ne pas être entraînée par le cylindre quand la fibre est à l'arrêt. Cette portion angulaire est par exemple de l'ordre de 90°.

La portion angulaire de contact entre la courroie et la fibre est inférieure à la portion angulaire de contact entre la courroie et le cylindre, l'écartement entre deux cylindres étant défini de sorte que les fibres ne viennent pas au contact des courroies au niveau des parties d'extrémités des sabots. La portion angulaire de contact entre la fibre et la courroie sera déterminée de façon à limiter la surface d'adhérence entre la fibre et la courroie, notamment avec la mise en oeuvre de fibres pré-imprégnées collantes, et ainsi limiter l'effort nécessaire pour décoller la fibre (effort de pelage). Plus cette portion angulaire sera faible, plus le nombre de cylindres intermédiaires sera important.

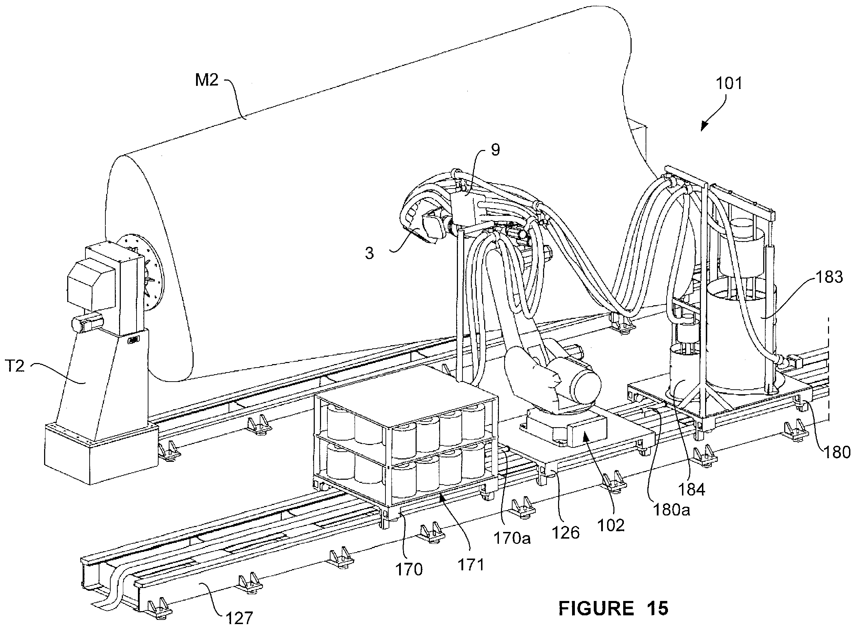

Comme précédemment, des tronçons de tubes flexibles d'acheminement 173 venant des étagères permettent d'amener sous la forme de nappes les fibres sur les cylindres d'entrée 191a. En sortie, les fibres passent ensuite dans des tronçons (non représentés) de tubes d'acheminement pour être acheminées vers la tête de placement. Dans cette variante, les tubes flexibles sont de section rectangulaire, comme mieux visible sur la figure 12. Pour une même nappe, les tubes sont disposés bord à bord. L'utilisation de tubes de section rectangulaire permet l'acheminement de fibres de grandes largeurs, par exemple des fibres de 6,35 mm à 25 mm de large, sans risque que la fibre se retourne sur elle-même ou se plie sur le côté. En effet, quels que soient les mouvements du robot, les tuyaux de sections rectangulaire vont fléchir de telle façon que la fibre reste bien à plat, sans risque qu'elle s'affaisse sur le côté. A titre d'exemple, pour acheminer des fibres de 6,35 mm de large, les tubes ont une section rectangulaire intérieure de 8x2 mm, avec une épaisseur de paroi de 1 mm, soit une section extérieure de 10x4 mm. Les tubes peuvent être assemblés bord à bord en extrémité avec un encombrement réduit, notamment dans la tête d'application, et avec des distances très courtes entre l'entrée ou la sortie des tubes et les poulies de guidage en entrée et en sortie. La figure 15 illustre un deuxième mode de réalisation d'une machine pour l'application de fibre sur un mandrin M2 monté rotatif sur un positionneur T2 à axe horizontal. La machine de placement 101 se différencie de celle décrite précédemment en référence aux figures 1 à 7, par le fait que le robot 102 est assemblé sur un chariot 126 monté coulissant sur un axe linéaire constitué de deux rails 127, parallèlement à l'axe du positionneur. Le chariot est équipé de moyens d'entraînement, par exemple de type galets motorisés, asservis par l'unité de commande de la machine, pour déplacer le robot le long de cet axe linéaire. En outre, les vides-fûts 183, 184 pour le stockage et l'alimentation en résine et les étagères 171 de stockage de fibres sont également disposés sur des chariots 170, 180 montés coulissant sur les rails, de part et d'autre du robot 102. Ces chariots 170, 180 sont reliés au chariot du robot 126 par des bras de liaison 170a, 180a et/ou sont équipés de moyens d'entraînement individuel.

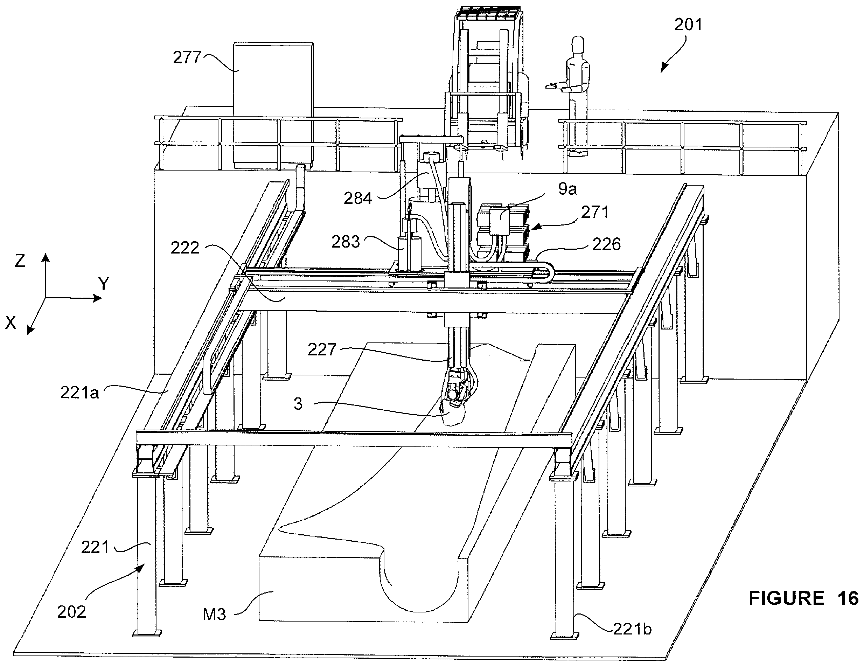

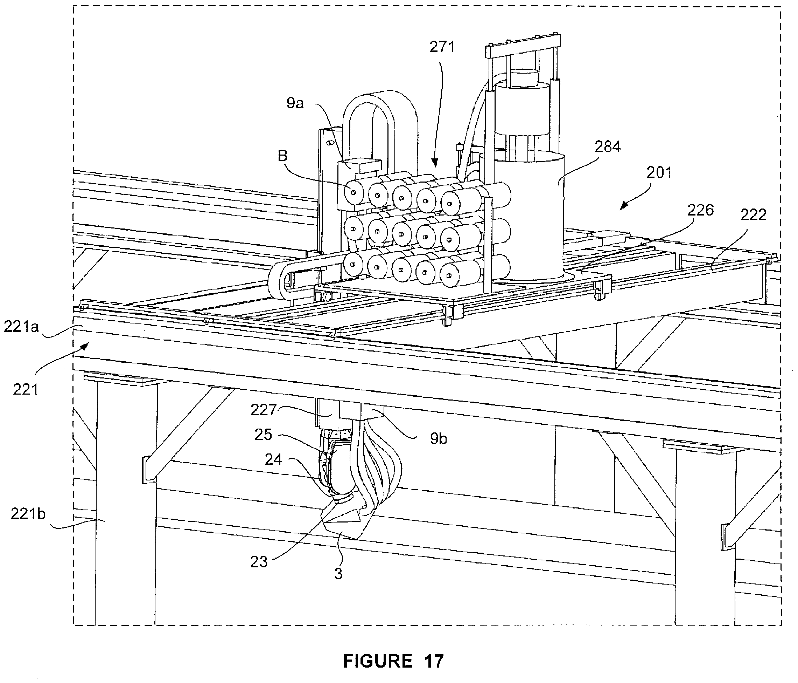

Les figures 16 et 17 illustrent un troisième mode de réalisation d'une machine de placement 201. Le système de déplacement 202 de la machine comprend un premier chariot 222 monté mobile selon une première direction horizontale X entre les deux barres support 221a parallèles d'un portique 221, un deuxième chariot 226 monté mobile sur le premier chariot selon une deuxième direction horizontale Y perpendiculaire à la première, et un troisième chariot 227 monté mobile sur le deuxième chariot 226 selon une troisième direction verticale Z. Les déplacements du premier, deuxième et troisième chariots sont assurés par des moyens d'entraînement embarqués sur chacun d'entre eux, et asservis par l'unité de commande de la machine placée dans une armoire 277.

Un poignet de robot, comprenant trois tronçons 23, 24 et 25 et portant une tête de placement 3, tel que décrit précédemment en référence à la figure 2, est monté pivotant autour de son axe A3 à l'extrémité inférieure du troisième chariot 227, de sorte que la tête de placement puisse être déplacée au-dessus d'un moule M3 placé entre les montants 221b du portique.

Les vides-fûts 283, 284 pour le stockage et l'alimentation en résine sont placés sur le deuxième chariot 226. La machine est prévue pour l'application de fibres, par exemple de type fibres de carbone F, conditionnées sous forme de bobines B. Les bobines sont montées sur un cantre 271 placé également sur le deuxième chariot. Chaque bobine est montée sur un mandrin du cantre, non asservi en rotation, éventuellement équipé de moyens de freinage en rotation. Les fibres passent sur des rouleaux de renvoi et/ou dans des poulies du cantre, puis directement en sortie du cantre dans un pré-délivreur 9a, tel que décrit précédemment selon le premier ou le deuxième mode de réalisation. Les fibres passent ensuite dans des tubes d'acheminement puis dans un second pré-délivreur 9b monté à l'extrémité inférieure du troisième chariot, avant le poignet du robot. Les fibres sont ensuite acheminées via des tubes d'acheminement jusqu'à la tête de placement. Un contrôle des décélérations du robot et/ou un réglage mécanique des moyens de freinage précités permettront de contrôler l'inertie en rotation des bobines à la déroulée, notamment quand une fibre est coupée à la volée pour arrêter la bobine en rotation de façon instantanée ou lors de fortes décélérations. Avantageusement, la machine comprend un cantre équipé d'un système de freinage automatique asservi en boucle fermée en fonction de la tension de la fibre, tel que décrit dans le document brevet EP 697990. Ce système a l'avantage d'être auto-régulé mécaniquement, sans capteur ou actionneur électrique ou pneumatique, qui ont pour inconvénient d'être toujours en retard au démarrage, ce qui limite les phases d'accélération ou de décélération.

## Revendications

1. Tête d'application de fibres, destinée à être montée à l'extrémité d'un dispositif de déplacement, comprenant un rouleau d'application, des moyens de guidage des fibres sur ledit rouleau d'application, et des moyens d'application de résine (60) sur chaque fibre (F1, F2), lesdits moyens d'application (60) sont aptes à appliquer de la résine sur les fibres (F1, F2) en sortie des moyens de guidage (32a, 32b), lesdits moyens d'application (60) étant aptes à enduire les faces des fibres (F1, F2) opposées au rouleau d'application sous la forme d'un film, et/ou à déposer de la résine sur lesdites faces sous la forme d'un cordon.

2. Tête d'application de fibres (3) selon la revendication 1, **caractérisée en ce que** les moyens d'application de résine (60) comprennent une pluralité de canaux de distribution disposés en vis-à-vis dudit rouleau d'application (31) pour appliquer de la résine sur la face des fibres (F1, F2) opposée au rouleau d'application.

3. Tête d'application de fibres (3) selon la revendication 2, **caractérisée en ce que** les moyens d'application de résine comprennent un canal de distribution par fibre.

4. Tête d'application de fibres (3) selon la revendication 2 ou 3, **caractérisée en ce que** lesdits moyens d'application de résine comprennent au moins une buse à lèvre (60).

5. Tête d'application de fibres (3) selon la revendication 4, **caractérisée en ce que** ladite buse à lèvre (60) est équipée d'un clinquant définissant une pluralité de canaux de distribution.

6. Tête d'application de fibres (3) selon la revendication 3, **caractérisée en ce que** lesdits moyens d'application de résine comprennent une pluralité de buses tubulaires, définissant chacune un canal de distribution pour une fibre.

7. Tête d'application de fibres selon l'une des revendications 1 à 6, **caractérisée en ce qu'**elle comprend en outre des moyens de dosage (61) aptes à alimenter en résine lesdits moyens d'application (60) à un débit régulé en fonction de la vitesse de déplacement des fibres.

8. Tête d'application de fibres selon l'une des revendications 1 à 7, **caractérisée en ce qu'**elle comprend des moyens de coupe (39-41) aptes à couper les fibres, et des moyens de ré-acheminement (42-44, 58) aptes à ré-acheminer, chaque fibre venant d'être coupée, lesdits moyens de coupe et moyens de ré-acheminement étant disposés en amont des moyens d'application de résine (60) .

9. Tête d'application de fibres selon la revendication 8, **caractérisée en ce que** lesdits moyens de guidage comprennent pour chaque fibre, des conduits (35-38), de section transversale circulaire, entre lesquels les moyens de coupe et les moyens de ré-acheminement sont disposés.

10. Tête d'application de fibres selon la revendication 9, **caractérisée en ce que** les moyens de ré-acheminement comprennent des systèmes d'entraînement à galets et contre-galets (42-44), et des moyens d'injection de gaz (58, 59) pour injecter un gaz dans l'un desdits conduits de guidage.

11. Machine d'application de fibres comprenant un système de déplacement d'une tête d'application de fibre, des moyens de stockage de fibres, et des moyens d'acheminement des fibres desdits moyens de stockage vers la tête d'application, **caractérisée en ce que** ladite tête d'application de fibres est telle que définie à l'une quelconque des revendications 1 à 10.

12. Machine selon la revendication 11, **caractérisée en ce qu'**elle comprend des moyens de dosage (61) aptes à alimenter en résine lesdits moyens d'application de résine (60) de la tête d'application de fibres
à un débit régulé en fonction de la vitesse de déplacement des fibres, lesdits moyens de dosage étant asservis par une unité de commande de la machine.

13. Machine selon la revendication 12, **caractérisée en ce que** lesdits moyens de dosage comprennent au moins une pompe volumétrique (61) comportant une chambre de dosage avec un orifice de refoulement, un piston mobile dans la chambre de dosage, et des moyens d'actionnement dudit piston (63), asservis par l'unité de commande.

14. Machine d'application de fibres selon la revendication 12 ou 13, **caractérisée en ce qu'**elle comprend en outre des moyens de stockage et d'alimentation (83, 84, 183, 184, 283, 284) aptes à stocker de la résine et à alimenter en résine lesdits moyens de dosage (61).

## Patentansprüche

1. Faserapplikationskopf, der bestimmt ist, am Ende einer Verlagerungsvorrichtung angebracht zu sein, umfassend eine Applikationswalze, Führungsmittel der Fasern auf der Applikationswalze und Harzapplikationsmittel (60) auf jede Faser (F1, F2), die Applikationsmittel (60) imstande sind, Harz auf die Fasern (F1, F2) am Ausgang der Führungsmittel (32a, 32b) zu applizieren, wobei die Applikationsmittel (60) imstande sind, die Flächen der Fasern (F1, F2) gegenüber der Applikationswalze in Form eines Films zu beschichten und/oder Harz auf die Flächen in Form eines Strangs aufzutragen.

2. Faserapplikationskopf (3) nach Anspruch 1, **dadurch gekennzeichnet, dass** die Harzapplikationsmittel (60) eine Vielzahl von Verteilerkanälen umfassen, die gegenüber der Applikationswalze (31) angeordnet sind, um Harz auf die Fläche der Fasern (F1, F2) gegenüber der Applikationswalze aufzutragen.

3. Faserapplikationskopf (3) nach Anspruch 2, **dadurch gekennzeichnet, dass** die Harzapplikationsmittel einen Verteilerkanal je Faser umfassen.

4. Faserapplikationskopf (3) nach Anspruch 2 oder 3, **dadurch gekennzeichnet, dass** die Harzapplikationsmittel mindestens eine Lippendüse (60) umfassen.

5. Faserapplikationskopf (3) nach Anspruch 4, **dadurch gekennzeichnet, dass** die Lippendüse mit einer Folie ausgestattet ist, die eine Vielzahl von Verteilerkanälen definiert.

6. Faserapplikationskopf (3) nach Anspruch 3, **dadurch gekennzeichnet, dass** die Harzapplikationsmittel eine Vielzahl röhrenförmiger Düsen umfassen, die jeweils einen Verteilerkanal für eine Faser definieren.

7. Faserapplikationskopf nach einem der Ansprüche 1 bis 6, **dadurch gekennzeichnet, dass** er ferner Dosiermittel (61) umfasst, die imstande sind, die Applikationsmittel (60) mit einem in Abhängigkeit von der Verlagerungsgeschwindigkeit der Fasern eingestellten Durchsatz zu versorgen.

8. Faserapplikationskopf nach einem der Ansprüche 1 bis 7, **dadurch gekennzeichnet, dass** er Schneidemittel (39-41) umfasst, die imstande sind, die Fasern zu schneiden, und Weiterbeförderungsmittel (42-44, 58), die imstande sind, jede Faser, die soeben geschnitten wurde, weiterzubefördern, wobei die Schneidemittel und Weiterbeförderungsmittel stromaufwärts der Harzapplikationsmitteln (60) angeordnet sind.

9. Faserapplikationskopf nach Anspruch 8, **dadurch gekennzeichnet, dass** die Führungsmittel für jede Faser Leitungen (35-38) mit kreisförmigem Querschnitt umfassen, zwischen denen die Schneidemittel und Weiterbeförderungsmittel angeordnet sind.

10. Faserapplikationskopf nach Anspruch 9, **dadurch gekennzeichnet, dass** die Weiterbeförderungsmittel Antriebssysteme mit Rollen und Gegenrollen (42-44) und Gaseinleitungsmittel (58, 59), um ein Gas in eine der Führungsleitungen einzuleiten, umfassen.

11. Faserapplikationsmaschine, umfassend ein Verlagerungssystem eines Faserapplikationskopfs, Faserlagermittel und Beförderungsmittel der Fasern von den Lagermitteln zu dem Applikationskopf, **dadurch gekennzeichnet, dass** der Faserapplikationskopf wie nach einem der Ansprüche 1 bis 10 definiert ist.

12. Maschine nach Anspruch 11, **dadurch gekennzeichnet, dass** sie Dosiermittel (61) umfasst, die imstande sind, die Harzapplikationsmittel (60) des Faserapplikationskopfs mit einem in Abhängigkeit von der Verlagerungsgeschwindigkeit der Fasern eingestellten Durchsatz zu versorgen, wobei die Dosiermittel von einer Steuereinheit der Maschine gesteuert werden.

13. Maschine nach Anspruch 12, **dadurch gekennzeichnet, dass** die Dosiermittel mindestens eine volumetrische Pumpe (61) umfassen, aufweisend eine Dosierkammer mit einer Ausgabeöffnung, einen in der Dosierkammer beweglichen Kolben und Betätigungsmittel des Kolbens (63), die von der Steuereinheit gesteuert werden.

14. Faserapplikationsmaschine nach Anspruch 12 oder 13, **dadurch gekennzeichnet, dass** sie ferner Speicher- und Versorgungsmittel (83, 84, 183, 184, 283, 284) umfasst, die imstande sind, Harz zu speichern und die Dosiermittel (61) mit Harz zu versorgen.

## Claims

1. Fiber application head, intended to be mounted at the end of a moving system, including an application roller and means for guiding the fibers onto said application roller, means for the application of resin (60) to each fiber (F1, F2), said application means (60) being able to apply resin to the fibers (F1, F2) as they leave the guiding means (32a, 32b), said application means being able to coat the surfaces the fibers opposite the application roller with resin in the form of a film, and/or to deposit resin on said surfaces in the form of a bead.

2. Fiber application head (3) according to claim 1, **characterized in that** the resin application means (60) include a plurality of dispensing channels arranged facing said application roller (31) so that resin can be applied to the surface of the fibers (F1, F2) opposite the application roller.

3. Fiber application head (3) according to claim 2, **characterized in that** the resin application means include one dispensing channel per fiber.

4. Fiber application head (3) according to claim 2 or 3, **characterized in that** said resin application means include at least one lip nozzle (60).

5. Fiber application head (3) according to claim 4, **characterized in that** said lip nozzle (60) is fitted with a foil defining a plurality of dispensing channels.

6. Fiber application head (3) according to claim 3, **characterized in that** said resin application means includes a plurality of tubular nozzles, each defining a dispensing channel for a fiber.

7. Fiber application head according to one of claims 1 to 6, **characterized in that** it furthermore comprises dosing means (61) able to supply said resin application means (60) with resin at a flow rate controlled as a function of the fiber displacement speed.

8. Fiber application head according to one of claims 1 to 7, **characterized in that** it includes cutting means (39-41) able to cut the fibers, and re-routing means (42-44, 58) able to reroute each fiber that has just been cut, said cutting means and re-routing means being placed upstream of the resin application means (60).

9. Fiber application head according to claim 8, **characterized in that** said guiding means include for each fiber ducts (35-38) of circular transverse cross-section, between which the cutting means and the re-routing means are placed.

10. Fiber application head according to claim 9, **characterized in** the re-routing means include drive systems with rollers and kicking rollers (42-44), and air injection means (58, 59) for the injection of a gas into one of said guiding ducts.

11. Fiber application machine that includes a system for moving a fiber application head, fiber storing means, and fiber conveying means for conveying fibers from said storing means to the application head, **characterized in that** said application head is as specified in one of the claims 1 to 10.

12. Machine according to claim 11, **characterized in that** it comprises dosing means (61) able to supply said resin application means of the fiber application head with resin at a flow rate controlled as a function of the fiber displacement speed, said dosing means being automatically controlled by a control unit of the machine.

13. Machine according to claim 12, **characterized in that** said dosing means include at least one volumetric pump (61) comprising a dosing chamber with an outlet, a piston mobile in the dosing chamber, and means for actuating said piston (63), automatically controlled by the control unit.

14. Machine according to claim 12 or 13, **characterized in that** it furthermore includes storing and supply means (83, 84, 183, 184, 283, 284) able to store resin and supply said dosing means (61) with resin.
